(19) Europäisches Patentamt / European Patent Office / Office européen des brevets

(11) **EP 1 894 757 A1**

(12) **EUROPEAN PATENT APPLICATION**

(43) Date of publication:
**05.03.2008 Bulletin 2008/10**

(51) Int Cl.:
***B60H 1/00*** *(2006.01)*

(21) Application number: **07114091.7**

(22) Date of filing: **09.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **30.08.2006 DE 102006040664**

(71) Applicant: **Valeo Klimasysteme GmbH**
**96476 Rodach (DE)**

(72) Inventors:
• **Huynh, Tan Duc**
**93330 Neuilly sur Marne (FR)**

• **Autran, Frederic**
**75018 PARIS (FR)**
• **Mann, Christoph**
**96450 Coburg (DE)**
• **Adam, Franck**
**98646 Stressenhausen (DE)**

(74) Representative: **Léveillé, Christophe**
**Valeo Systemes Thermiques**
**8, rue Louis Lormand**
**La Verrière BP 513**
**78321 Le Mesnil-Saint- Denis Cedex (FR)**

(54) **Car interior temperature determination**

(57) Device and a method to determine a car interior temperature value at a distinct point of a first temperature detecting element (330) and a second temperature detecting element (350) in a car interior, wherein the first temperature detecting element (330) is arranged to record a first temperature value on a surface component (322) of a board panel, and the second temperature detecting element (350) is arranged to record a second temperature value in a volume adjacent to the car interior, and wherein the car interior temperature value is calculated at least on the basis of the first temperature value and the second temperature value.

Fig. 3a

EP 1 894 757 A1

**Description**

The present invention relates to vehicle air conditioning. The present invention particularly relates to temperature acquisition and temperature control in air conditioners for cars.

Modern car air conditioners mostly regulate via temperature detecting elements, with which the temperature inside the car interior and in some cases also outside the car can be measured in order to adjust the air conditioner accordingly. In order to prevent high costs and a laborious installation, the temperature detecting elements are frequently arranged in the air conditioner control or in the vicinity thereof. Thereby, arrangements are known, wherein the temperature detecting elements are mounted on the surface of a control panel or connected thermally thereto. However, in this case, temperature variations are recorded, particularly heating of the control panel, for example due to solar radiation or heat-emitting devices in the vicinity, which results in the temperature measured not corresponding to the temperature in the car interior.

In order to record the air temperature in the car interior more precisely, systems are known wherein a temperature detecting element is arranged inside the air conditioner control or at another point at a distance or thermally isolated from the control panel. In this case, however, an insufficient air exchange with the interior air or the heating of adjacent components may influence the temperature measurement.

Moreover, systems are known, wherein an air flow from the car interior is applied to a temperature detecting element arranged inside a housing. Blowers are generally used therein, which supply an air flow from the car interior via an opening in the housing or via an air duct to the temperature detecting element. However, these systems have the drawback that active blowers, such as those frequently used, represent additional and expensive components and sources of faults, the failure of which involve operational damage for the car air conditioning. In addition, the air supply ducts or openings can easily become blocked and thereby affect the temperature measurement.

Furthermore, the abovementioned systems have the drawback that the temperature measurement is only carried out at one point in the car or with respect to the car interior, which is frequently at a distance from the car passengers. Thus, for example, the temperature at the measurement point, for example on or in the air conditioner control device may be considerably different to the temperature at one of the seats, particularly in the vicinity of a user's head. This is particularly the case if the car interior or specific areas of the car interior are heated by solar radiation.

In order to account for this effect, it is known to use radiation detecting elements, particularly photo-detecting elements, with which the intensity of the solar radiation occurring in the car interior is measured. With the solar radiation measurement, it is possible to determine an adjustment, for example relating to the time and/or intensity, e.g. in the form of an adjustment factor or adjustment term for the temperature value measurement via a temperature detecting element. The adjustment is evidently critically dependent on the positioning of the radiation detecting element.

However, for cost reasons, it is desirable to arrange the temperature detecting elements and radiation detecting elements spatially close to each other and in the vicinity of or on the air conditioner or on or in the air conditioner control. Thereby, systems are known, wherein a radiation detecting element and a temperature detecting element are respectively combined and, for example, in or on the air conditioner control panel or also on the board panel in the vicinity of the windscreen. In this case, the temperature detecting element is protected against solar radiation by a suitable cover.

However, combined temperature and radiation detecting elements have the drawback of being difficult to install and being subject to mutual failure. In addition, radiation detecting elements and photodiodes are relatively expensive components and the arrangement of the radiation detecting elements is of critical importance, as, depending on the position of the car with respect to the sun, radiation occurs from different sides and the solar radiation is not always applied to the radiation detecting element.

In order to overcome the abovementioned drawbacks, the invention proposes a device to determine a car interior temperature value at a distinct point of a first temperature detecting element and a second temperature detecting element in a car interior, wherein the first temperature detecting element is arranged to record a first temperature value on a surface component of a board panel, and

the second temperature detecting element is arranged to record a second temperature value in a volume adjacent to the car interior, and

wherein the car interior temperature value is determined at least on the basis of the first temperature value and the second temperature value.

The invention also proposes a method to determine a car interior temperature value at a distinct point of a first temperature detecting element and a second temperature detecting element in a car interior, comprising the following steps: recording a first temperature value with a first temperature detecting element on a surface component of a board panel; recording a second temperature value with a second temperature detecting element in a volume adjacent to the car interior; and calculating the car interior temperature value at least on the basis of the first temperature value and the second temperature value.

The device according to the invention and the method according to the invention enable in an advantageous way the determination of the car interior temperature at a relevant point for the user, such as for example the position at which the head or another part of the user's body is located, when the user sits in the car interior, without having to provide temperature detecting elements with corresponding wiring or connections at these points.

In addition, the device according to the invention and the method according to the invention offer the advantage that the car interior temperature and the car interior temperature value can also be determined reliably in the event of solar radiation. In any case, the determination is based on the determination of temperature values and it is possible to do without the expensive radiation sensors generally used. By means of the advantageous arrangement, it is also possible to do without an active application of the temperature detecting elements, for example by blowers.

The temperature detecting elements are thereby designed to measure a temperature value. Therefore, it is possible to use temperature-dependent electrical resistors, particularly NTC resistors, such as those known to those skilled in the art and commercially available at a low cost.

In a preferential embodiment, the adjacent volume to the car interior is located in a heater and/or air conditioner control unit. In this case, no further cables and connections are required, which makes assembly easier. The control and the volume can thus be located at any point of the car interior. Preferentially, the control regulates via a control panel or control board and the volume adjacent to the car interior is located behind the control board. Thereby, the second detecting element, the control and control components of the air conditioner may be arranged in and on a housing, whereby the air conditioner is cost-effective and easy to assemble.

In a further preferential embodiment, the first temperature detecting element is arranged such that it may be impacted at least in one direction with radiation, particularly solar radiation. In this way, at least one section of the temperature detecting element is exposed to solar radiation, if the car is aligned with respect to the sun such that the surface component is exposed to solar radiation. The temperature detecting element may also comprise additional components for this purpose, which preferentially consist of thermally conductive material and are arranged on the surface component and on the measurement probe, particularly the NTC resistor.

In a preferential embodiment, the surface component of the board panel is the control board of a ventilation unit and/or air conditioner. In this way, the first temperature detecting element may be arranged directly on the air conditioner control in a cost-effective and easy-to-assemble manner. The solar radiation occurring on the board panel is thus taken into consideration. This is particularly advantageous if the control components and thus the surface component are positioned relatively high in the car.

In an alternative embodiment, the surface component of the board panel is arranged in the vicinity of a car window. Thereby it can be provided with a separate component which is arranged for example in the vicinity of the car windscreen. Thereby the incident solar radiation can be recorded particularly comprehensively.

In a further preferential embodiment, the device comprises a third temperature detecting element, arranged in a board of the ventilation unit and/or air conditioner. In this way, additional heat sources, such as circuit components on the board and/or at another point of the air conditioner control are taken into account in the determination of the car interior temperature value. In addition or alternatively, additional temperature detecting elements may be provided, for example at additional heat sources, which can render the temperature determination even more precise.

In addition, radiation detecting elements may also be used, although they are not necessary for the invention, in order to record the incident radiation at suitable points of the car interior.

In a preferential embodiment, the car interior temperature value is calculated by totalling the second temperature value with the difference between the first temperature value and the second temperature value multiplied by an adjustment factor. Thereby only temperature values and no further parameters to be determined are required to determine the car interior temperature value, which also enables a simple and reliable determination of the car interior temperature, if the temperature value at all temperature detecting elements, e.g. after the car has been in the sun for some time, is above the car interior temperature value.

In this way, the adjustment factor may be determined theoretically, empirically or experimentally or deduced from temperature power coefficients.

Further temperature values can be added with corresponding adjustment factors and corresponding subtraction.

The invention and further characteristics of the invention will become clearer on reading the following description of preferential embodiments given as examples only, with reference to the figures, wherein:

Fig. 1 illustrates the points at which the temperature detecting elements according to the invention are provided;
Fig. 2a illustrates an arrangement of temperature detecting elements according to the invention;
Fig. 2b illustrates a schematic diagram for the determination of a car interior temperature with an arrangement according to Fig. 2a;
Fig. 3a illustrates a further arrangement of temperature detecting elements according to the invention;
Fig. 3b illustrates the arrangement in Fig. 3a with corresponding heat transfers; and

In the description below of a detailed embodiment and in the first, the same or similar components are given the same references.

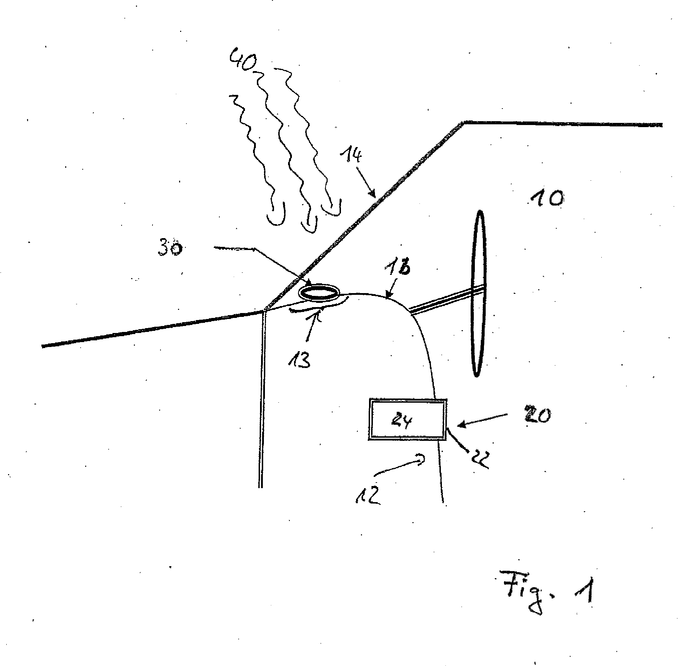

Fig. 1 is a schematic representation of a section of a car. In a car interior 10, a board panel 16 is arranged below a windscreen 14. In this way, the board panel comprises an upper section 13 which is located in the vicinity of the windscreen. In this section, defrosting outlets and/or indicator components may generally be arranged. In addition, the board panel comprises a lower section 12, whereon control components for the control of car functions are generally arranged within the user's reach. In addition to the car functions, according to the present invention, the control 20 also comprises a heater and/or air conditioner. In this way, the control 20 comprises a housing, which is equipped with a control side 22, whereon a plurality of switches and/or control components may be arranged. In this way, the control side 22 is generally arranged in the lower section 12 of the control board 16, so that the control components to regulate the heater and/or air conditioner are sufficiently accessible for the user. The control housing defines a volume 24, wherein for example the electronics required for the heater and/or air conditioner control are housed. In this way, the control 20 may be designed as a ready-made module, which is installed on the board panel during the assembly of the car or at another time. In this way, the control 20 may be subsequently replaceable, e.g. for repair purposes.

Moreover, a detecting element or an arrangement of detecting elements 30 may be arranged on the upper section 13 of the board panel 16, so that the detecting element or the arrangement of detecting elements may be directly or indirectly exposed to solar radiation 40 through the windscreen 14.

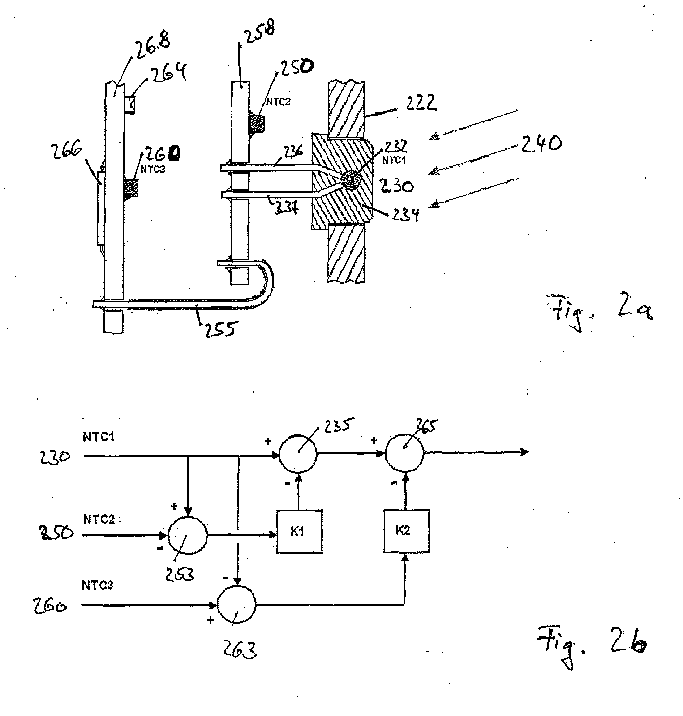

Fig. 2a illustrates an embodiment of the invention wherein three temperature detecting elements are arranged in and on a housing with at least one housing cover 222. For example, the housing of the control 20 may be an air conditioner, but may also be arranged at another point in the car. In this way, the housing cover 222 may be the control side 22 of the housing of the control 20.

The housing cover comprises a first temperature detecting element 230 consisting of temperature gauging head 232, which for example may be an NTC resistor (negative temperature coefficient resistor). In this case, the temperature gauging head is housed in a gauging member 234, which may be made of a sufficiently thermally conductive material and is located in an opening of the housing cover 222. Thereby, at least one surface of the gauging member 234 of the temperature detecting element 230 is located on the external side of the housing and may be heated with incident radiation, particularly with solar radiation 240.

In this way, the incident solar radiation is not, as is generally the case, heated with a radiation detecting element or a photodiode, but the gauging member 234 and thus the temperature detecting element 230 are heated via the radiation 240.

In this way, the temperature gauging head 232 is connected to or secured on a first board (PCB) 258 via pins or cables 236 and 237. In addition, on the first board 258, a second temperature detecting element (NTC2) 250 is arranged. In this way, the second temperature detecting element 250 may also comprise an NTC resistor. In this way, the second temperature detecting element 250 is arranged behind the housing cover 222 and thus provides protection against solar radiation 240. In this way, the second temperature detecting element 250 measures the temperature of a volume behind the housing cover 222 or inside the housing. Moreover, the board 258 comprises no or only a few, the lowest possible number of, heat-emitting components such as cables or similar components and comprises a connection 255 with a second board 268. Via the connection 255, the first temperature detecting element (NTC1) 230 and the second temperature detecting element (NTC2) 250 are connected electrically with at least one circuit on the second board 268.

On the second board (268), which may be a special but also a main board or any other board of the air conditioner control, different, standard electronic components, such as memories, processors, diodes, LED, etc. 264, 266 are arranged, which individually but also particularly in conjunction may produce and/or emit considerable heat. For this reason, in this embodiment, a third temperature sensor (NTC3) 260 is provided, which can also be of the NTC resistor type and measures the temperature on the board 268 and thus measures the heat emitted by the circuitry/components 266, 264.

In this way, the arrangement described with respect to Fig. 2a may be provided in or on the control 20 of the air conditioner or also at another point in the car, for example on the upper section 13 of the board panel 16 and form the arrangement of detecting elements 30 there.

Alternatively, the second temperature detecting elements (NTC2) 250 and the third temperature detecting element (NTC3) 260 may be arranged in the control 20 or in another position directly protected against direct radiation 40 and the first temperature detecting element (NTC1) 230 is exposed at the upper section 13 of the board panel 16 below the windscreen 14 to the radiation 40, as described with reference to Fig. 1.

Fig. 2b is a graphic representation of how, on the basis of the first temperature value T1 determined by means of the first temperature detecting element (NTC1) 230, the second temperature value T2 determined by means of the second temperature detecting element (NTC2) 250 and the third temperature value T3 determined by means of the third temperature detecting element (NTC3) 260, without using a radiation detecting element, a temperature value Tcab or another reference value for another point in the car interior, for example in the vicinity of a user of the car, can be determined.

In this way, according to the embodiment of the invention represented in Figure 2b, the differential T1 - T2 is established in addition term 253, representing the difference between the ambivalent interior temperature at NTC2 and the temperature heated by solar radiation T1. Without any solar radiation or other influences on the board panel, this temperature differential T1 - T2 equals zero. With increasing solar radiation, the temperature differential T1 - T2 also increases. A factor K1 is then applied to the temperature differential T1 - T2, which is subtracted from T1 in addition term T1. Thereby, the value K1 may be adapted to the specific characteristics of the car and determined empirically for example. In this way, a good estimation of the car interior temperature Tcab can be calculated.

As electronic components or other heat-emitting objects in the vicinity of the second temperature detecting element (NTC2) 250 may also influence the measurement of the determination Tcab, additional measured temperature values T3 may be taken into account in the calculation. In this way, as above, the differential T3 - T1 is established in addition term 263. This differential may, depending on the operating state and heating of the electronics and the solar radiation, be positive or negative, depending on which detecting element more heating occurs. A factor K2 is also applied to the temperature differential T3 - T1, which is subtracted from T1 in addition term 265. In this way, the value K2 may be adapted to specific characteristics of the car and determined empirically for example.

In sum, the car interior temperature value Tcab can thus be calculated according to the formula

$$\text{Tcab} = \text{T1} - \text{K1} * (\text{T1} - \text{T2}) - \text{K2} * (\text{T1} - \text{T3})$$

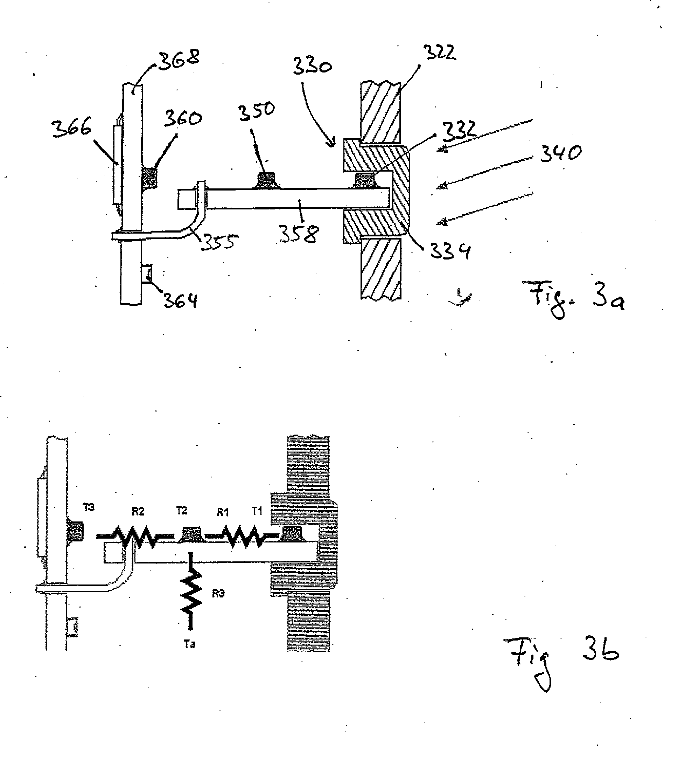

Fig. 3a illustrates an alternative embodiment of the invention according to the embodiment represented with reference to Fig. 2a, wherein three temperature detecting elements are arranged in or on a housing with at least one housing cover 322. The housing may also in this case be the housing of the control 20 of an air conditioner but may also be arranged at another point in the car. In this way, the housing cover 322 may be the control side 22 of the housing of the control 20.

The housing cover comprises a first temperature detecting element (NTC1) 330 consisting of a temperature gauging head 332, which for example may be an NTC resistor (negative temperature coefficient resistor). In this case, the temperature gauging head is housed in a gauging member 334, which may be made of a sufficiently thermally conductive material and is located in an opening of the housing cover 322. Thereby, at least one surface of the gauging member 334 of the first temperature detecting element 330 is located on the external side of the housing and may be heated with incident radiation, particularly with solar radiation 340.

In this way, the incident solar radiation is not, as is generally the case, heated with a radiation detecting element or a photodiode, but the gauging member 334 and thus the first temperature detecting element 330 and thus the temperature gauging head 332 are heated via the radiation 340. In this way, the use of expensive photodiodes can be advantageously avoided.

In this embodiment, the first temperature gauging head 232 is arranged directly on the first board 358, whereon a second temperature detecting element (NTC2) 350 is also arranged. This offers the advantage that the gauging head 332 and the second temperature detecting element (NTC2) 350 may be of the same design and no pins or other connection to the first temperature detecting element are required. In addition, the thermal resistance between the first temperature detecting element 330 and second temperature detecting element 350 may be determined better with this arrangement.

In this way, the second temperature detecting element (NTC2) 350 is also arranged behind the housing cover 322 and is thus protected against solar radiation 340. In this way, as described with reference to Figure 2a, the second temperature detecting element 350 measures the temperature of a volume behind the housing cover 22 or inside the housing.

In this way, all further components are comparable or identical with respect to the embodiment represented with reference to Fig. 2a. The board 358 is connected by means of a connection 355 with a second board 368 and also secured thereto. Via the connection 355, the first temperature detecting element (NTC1) 330 and the second temperature detecting element (NTC2) 350 are connected with at least one circuit to the second board 368.

Moreover, the second board 368 comprises electronic components 364, 366, liable to produce heat and a third temperature sensor (NTC3) 360, which may also be an NTC resistor, is provided.

The embodiment represented in Fig.3a may also be arranged in the control 20 of the air conditioner or also at another point on the board panel or in the car.

To determine the car interior temperature Tcab, the calculation may also be performed with the method described with reference to Fig. 2a.

However, the invention may also be used with another method to calculate the car interior temperature or ambivalent temperature Ta, as described with reference to Fig. 3b.

In this way, Fig. 3b represents the thermal resistances between the individual temperature measurement points. A first thermal resistance R1 occurs between the first temperature detecting element (NTC1) 330, which shows the temperature and T1 and the second temperature detecting element (NTC2) 350 with a temperature T2. A second thermal resistance R2 occurs between the first temperature detecting element (NTC3) 360, which shows the temperature T3, and the second temperature detecting element (NTC2) 350 with the temperature T2 and a third thermal resistance R3 occurs between the second temperature detecting element (NTC2) 350 with the temperature T2 and the car interior with ambivalent temperature Ta. The ambivalent temperature can be calculated with the formula:

$$Ta = T2 - R3/R2 * (T3 - T2) - R3/R1 * (T1 - T2)$$

In this way, the thermal resistances can be determined empirically and/or experimentally and do not vary over the entire lifetime of the car.

With this method, the ambivalent temperature can also be determined reliably, if all the temperature values T1, T2 and T3 measured on the temperature detecting elements 330, 350, 360 are significantly higher than the ambivalent temperature at the position in the car, which is intended for a user for example.

Those skilled in the art will be aware that this method can also be used with more than three temperature detecting elements, whereby the accuracy can be increased further. However, the method can also be used with only two sensors.

The method and calculation methods described above may be used both in the initial phase, if for example the car interior or specific areas of the car interior for example is particularly heated up due to parking in the sun and also in the operating phase of the car, if the electronics are heated considerably.

In this way, the invention may also be implemented with an additional algorithm, wherein a first car interior temperature value Tcab1 during the operation of the car is calculated on the basis of the total of the measured temperature values T1, T2, T3, to which an adjustment factor is respectively applied. In this way, additional temperature detecting elements may be provided and the temperature values measured are included in the total. In this way, the car interior temperature value Tcab1 may be used in normal operation to determine the car interior temperature.

If the car is stopped, the last car interior temperature value Tcab1 can be stored in memory and be adjusted according to the immobilisation time, when the car is started again, so that the car interior heated by solar radiation, if applicable, is taken into account accordingly.

**Claims**

1.    Device to determine a car interior temperature value (Tcab; Ta) at a distinct point of a first temperature detecting element (230; 330) and a second temperature detecting element (250; 350) in a car interior (10) wherein the first temperature detecting element (230; 330) is arranged to record a first temperature value (T1), on a surface component (222; 322) of a board panel (16), and the second temperature detecting element (250; 350) is arranged to record a second temperature value (T2) in a volume (24) adjacent to the car interior (10) and wherein the car interior temperature value (Tcab; Ta) is determined at least on the basis of the first temperature value (T1) and the second temperature value (T2).

2.    Device according to claim 1, wherein the adjacent volume (24) to the car interior is located in a control unit (20) of a heater and/or air conditioner.

3.    Device according to claim 1 or 2, wherein the adjacent volume (24) to the car interior is located behind a control board (22; 222; 322) of a ventilation unit and/or air conditioner.

4.    Device according to any of claims 1 to 3, wherein the first temperature sensor (230; 330) is arranged such that it can be exposed in at least one direction to radiation, particularly solar radiation (40; 240; 340).

5.    Device according to claim 4, wherein the surface component (222; 322) of the board panel (16) is a control board (22; 222; 322) of a ventilation unit and/or air conditioner.

6.    Device according to claim 4, wherein the surface component of the board panel (16) is arranged in the vicinity of a car window (14).

7.    Device according to any of the above claims, also comprising a third temperature detecting element (260; 360), arranged on a board (268; 368) of the ventilation under and/or air conditioner.

8. Device according to any of the above claims, also comprising a radiation detecting element to record the incident radiation, particularly solar radiation in the interior.

9. Method to determine a car interior temperature value (Tcab; Ta) at a distinct point of a first temperature detecting element (230; 330) and a second temperature detecting element (250; 350) in a car interior, comprising the following steps:

Recording a first temperature value (T1) with the first temperature detecting element (230; 330) on a surface component (222; 322) of a board panel (16);
Recording a second temperature value (T2) with a second temperature detecting element (250; 350) in a volume (24) adjacent to the car interior (10); and
Calculating the car interior temperature value (Tcab; Ta) at least on the basis of the first temperature value (T1) and the second temperature value (T2).

10. Method to determine a car interior temperature value (Tcab; Ta) according to claim 9, wherein the calculation of the car interior temperature value (Tcab; Ta) comprises the totalling of the second temperature value (T2) with the difference between the first temperature value (T1) and the second temperature value (T2) multiplied by an adjustment factor (K1).

11. Method to determine a car interior temperature value (Tcab; Ta) according to claim 10, wherein the adjustment factor (K1) is determined empirically or experimentally.

12. Method to determine a car interior temperature value (Tcab; Ta) according to claim 10 or 11, wherein the adjustment factor (K1) is the quotient based on an ambivalent thermal resistance value (R3) between the second temperature sensor (250; 350) and the car interior (10) and a first thermal resistance value (R1) between the first temperature sensor (230; 330) and the second temperature sensor (250; 350).

13. Method to determine a car interior temperature value (Tcab; Ta) according to any of claims 9 to 12, also comprising the step consisting of recording at least one additional temperature value (T3) and calculating the car interior temperature value (Tcab; Ta) also based on the at least one temperature value (T3).

Fig. 1

Fig. 2a

Fig. 2b

Fig. 3a

Fig 3b

**European Patent Office**

**EUROPEAN SEARCH REPORT**

Application Number

EP 07 11 4091

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 20 2004 002427 U1 (BEHR HELLA THERMOCONTROL GMBH [DE]) 26 August 2004 (2004-08-26) * paragraphs [0035] - [0049], [0052]; figures 1-4 * ----- | 1-13 | INV. B60H1/00 |
| X | DE 10 2004 009605 A1 (SIEMENS AG [DE]) 15 September 2005 (2005-09-15) * paragraph [0030]; figures 2,4 * ----- | 1-13 | |
| X | DE 197 28 803 C1 (EBERLE CONTROLS GMBH [DE]) 26 August 1999 (1999-08-26) * column 4, line 43 - column 7, line 64; figures 1-11 * ----- | 1-13 | |

TECHNICAL FIELDS SEARCHED (IPC)

B60H
G01K

The present search report has been drawn up for all claims

| Place of search | Date of completion of the search | Examiner |
|---|---|---|
| Munich | 4 December 2007 | Gumbel, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 11 4091

04-12-2007

| Patent document cited in search report | Publication date | Patent family member(s) | | Publication date |
|---|---|---|---|---|
| DE 202004002427 U1 | 26-08-2004 | NONE | | |
| DE 102004009605 A1 | 15-09-2005 | EP | 1718483 A2 | 08-11-2006 |
| | | WO | 2005082651 A2 | 09-09-2005 |
| | | KR | 20070004659 A | 09-01-2007 |
| DE 19728803 C1 | 26-08-1999 | NONE | | |

EPO FORM P0459